# EUROPEAN PATENT APPLICATION

(11) **EP 1 310 897 A1**
(43) Date of publication of application: **14.05.2003**
(21) Application number: 02257553.4
(22) Date of filing: 31.10.2002
(51) Int. Cl.: G06F 17/60

(54) **Method and apparatus for identifying facilities with compatible services**

(30) Priority: 08.11.2001 US 7533
(71) Applicant: Hewlett-Packard Company, Palo Alto, CA 94304 (US)
(72) Inventor: Clough, James, Boise, Idaho 83713 (US); Norris, Corey J., Meridian, ID 83642 (US); Cherry, Darrel, Meridian, ID 83642 (US)
(74) Representative: Jackson, Richard Eric

(57) **Abstract**

A request is received to locate a facility, such as a lodging facility, that has a particular computer-related service (302). The computer-related service may be a printer (502) in a guest room at a hotel or an Internet connection (514) in a guest room. A server identifies at least one facility having the requested computer-related service and communicates the identified facility to a source of the request (304). When identifying facilities, the server accesses a database containing multiple facilities and a listing of computer-related services associated with each facility. The server can also generate reports identifying reservations resulting from identifying and communicating facility information to the source of the request (408).

## Description

### TECHNICAL FIELD

The present invention relates to methods and systems that are capable of identifying facilities (such as hotels, conference centers, or airports) that offer particular services to visitors or guests.

### BACKGROUND

Many individuals travel with a portable computing device, such as a laptop computer, a palmtop computer, or a personal digital assistant (PDA). These individuals may desire particular services when traveling. Services of interest to travelers include, for example, a printer in a hotel room or other facility, or a high-speed Internet connection in a hotel room or other facility. A printer in a hotel room allows the individual to print documents quickly and confidentially in their own room. A high-speed Internet connection allows the individual to quickly check email, access files on a company server, or access data from one or more web sites. The availability of such services may cause an individual to select one facility over another.

Knowledge of such services prior to arrival at the facility may simplify the individual's travel. For example, if the hotel selected by the individual offers a printer in the reserved hotel room, it is not necessary for the individual to carry a portable printer. Also, if the hotel selected by the individual offers a high-speed Internet connection in the hotel room, the individual may decide not to travel with a modem.

Certain facilities, such as hotels, may be reluctant to invest in printers, Internet connections, or other electronic services (e-services) because they may not believe that these features will increase occupancy (i.e., the expense is not cost-effective). Existing facilities do not have a mechanism for accurately verifying the number of guests that selected the particular facility based on one or more particular services offered by the facility.

Further, existing reservation systems do not generally provide enough information to an individual to know whether the services offered by the facility are compatible with the individual's computer hardware and software. For example, an existing reservation system may indicate that a particular hotel offers printing services. However, the system does not indicate the type of printer or the type of computing systems that are supported by the printer. The individual will not realize that they have incompatible hardware or software until they arrive at the hotel and attempt to print using the hotel printer.

The invention described herein addresses these problems by allowing an individual to identify facilities offering a particular service and providing reports to facilities indicating the number of individuals that selected the facility based on a particular service offered by the facility.

### SUMMARY

A user generates a request to locate a facility (e.g., a lodging facility) that has a particular computer-related service. A server identifies facilities that meet the user's requirements and allows the user to make a reservation at one of the identified facilities. This system ensures that the identified facilities offer the desired computer-related service and that the computer-related service is compatible with the type of computing device to be operated by the user at the facility. Reports are generated that detail the number of users that selected an identified facility based on the availability of the computer-related service at the facility.

In a particular embodiment, a request is received to locate a lodging facility having a particular computer-related service. At least one lodging facility is identified having the requested computer-related service. The identified lodging facility is then communicated to a source of the request.

In one embodiment, the computer-related service is compatible with the hardware and the software associated with the source of the request.

In another embodiment, the computer-related service is compatible with a computing device to be used by the source of the request at the lodging facility.

In a particular embodiment, a report is generated for a lodging facility offering computer-related services. The report identifies reservations resulting from identifying and communicating lodging facility information to the source of the request.

In a described embodiment, the source of the request is allowed to make a reservation at an identified facility.

### BRIEF DESCRIPTION OF THE DRAWINGS

The present invention is illustrated by way of example and not limitation in the figures of the accompanying drawings. The same numbers are used throughout the figures to reference like components and/or features.

Fig. 1 illustrates a network environment in which the methods and systems described herein may be implemented.

Fig. 2 is a flow diagram illustrating a procedure for identifying facilities with particular features.

Fig. 3 is a flow diagram illustrating a procedure for locating facilities with requested features and making a reservation at a particular lodging facility.

Fig. 4 is a flow diagram illustrating a procedure for updating facility information and generating reports identifying users that selected a facility based on particular services offered by the facility.

Fig. 5 illustrates an exemplary computer coupled to a printer and a network access device.

Fig. 6 is a block diagram of a computer system that can be utilized in accordance with one or more embodiments described herein.

### DETAILED DESCRIPTION

The systems and methods described herein allow a user to identify facilities that offer particular computer-related services that are compatible with the user's computing device (e.g., a computing device used while traveling). The systems and methods also allow a user to make a reservation at an identified facility. These reservations are tracked by the system such that reports can be generated for various facilities indicating the number of individuals that selected the facility based on a particular service offered by the facility. This reporting allows the facilities to determine the value in offering such services to it's guests or users.

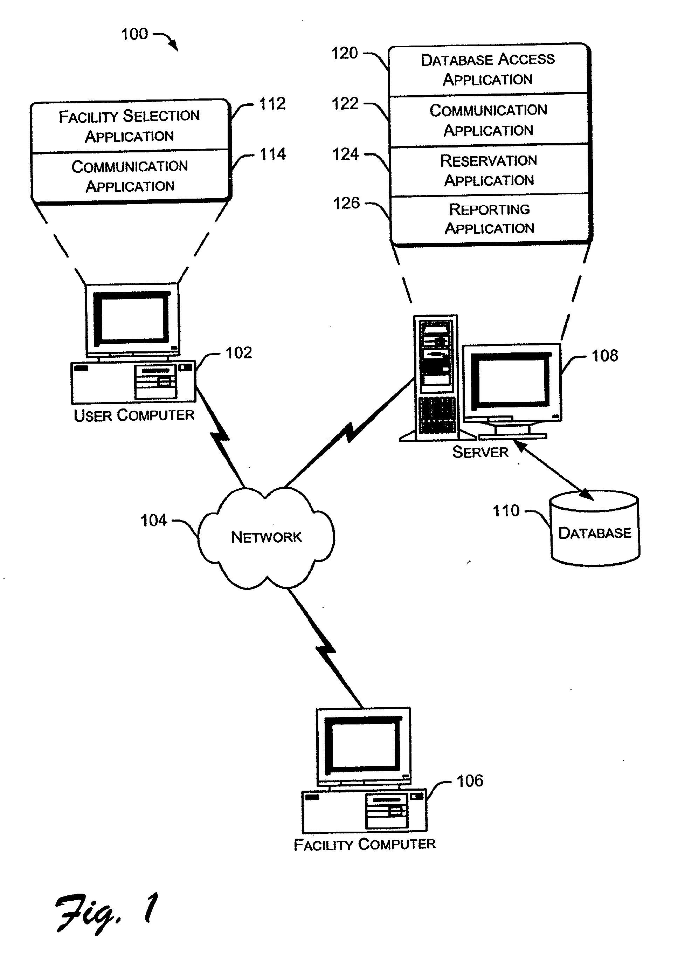

Fig. 1 illustrates a network environment 100 in which the methods and systems described herein may be implemented. A user computer 102 is coupled to a network 104 (e.g., the Internet), which is coupled to a facility computer 106 and a server 108. Although only one user computer, one facility computer, and one server are shown in Fig. 1, a particular network environment may include any number of user computers, facility computers, and servers coupled to one another. Network 104 may utilize any network topology and any network protocol. Furthermore, network 104 may represent a combination of two or more networks.

User computer 102 includes a facility selection application 112 that allows an individual using the computer to identify facilities (such as hotels, conference centers, or airport terminals) that offer one or more desired services that are compatible with the user's hardware and software. Identification of such facilities is particularly useful when traveling. The hardware and software for which the individual wants compatibility may be different from the hardware and software associated with computer 102. For example, the individual may use a different computer (such as a laptop or palmtop computer) or other computing device (such as a PDA) when traveling. In this situation, the facility selection application 112 knows of the hardware and software that the individual uses when traveling and identifies facilities based on that information.

In a particular implementation, the facility selection application 112 is installed on each client computer as part of the software that utilizes this facility selection service. For example, the facility selection application 112 is installed along with one or more print drivers and the appropriate hotel printing software. This implementation gives each client computer the knowledge of compatibility issues for the facility selection service and ensures that the proper software is available to the user of the service.

User computer 102 also includes a communication application 114 that allows the computer to communicate with other computers and devices coupled to the computer (e.g., coupled via network 104). For example, the communication application 114 allows the facility selection application 112 to communicate with server 108, which identifies appropriate facilities. The desired services offered by a facility may include, for example, printing facilities or network (e.g., the Internet) access.

Server 108 receives requests for facilities from one or more user computers 102 via network 104. In alternate embodiments, server 108 may receive requests via any method, such as a direct connection (not shown) between server 108 and the user computer 102. Server 108 is coupled to a database 110 that contains information about various facilities and the services offered by those facilities. Server 108 includes a database access application 120, which stores data to and retrieves data from database 110. A communication application 122 allows server 108 to communicate with other devices, such as computing devices coupled to network 104. A reservation application 124 allows server 108 to make reservations for a user at a facility that satisfies the user's request. A reporting application 126 generates reports for one or more facilities detailing the number of individuals that selected a facility based on a particular service (or services) offered by the facility. These reports are provided, for example, to one or more facility computers 106 via network 104. Alternatively, the reports may be mailed or otherwise provided to the appropriate facilities.

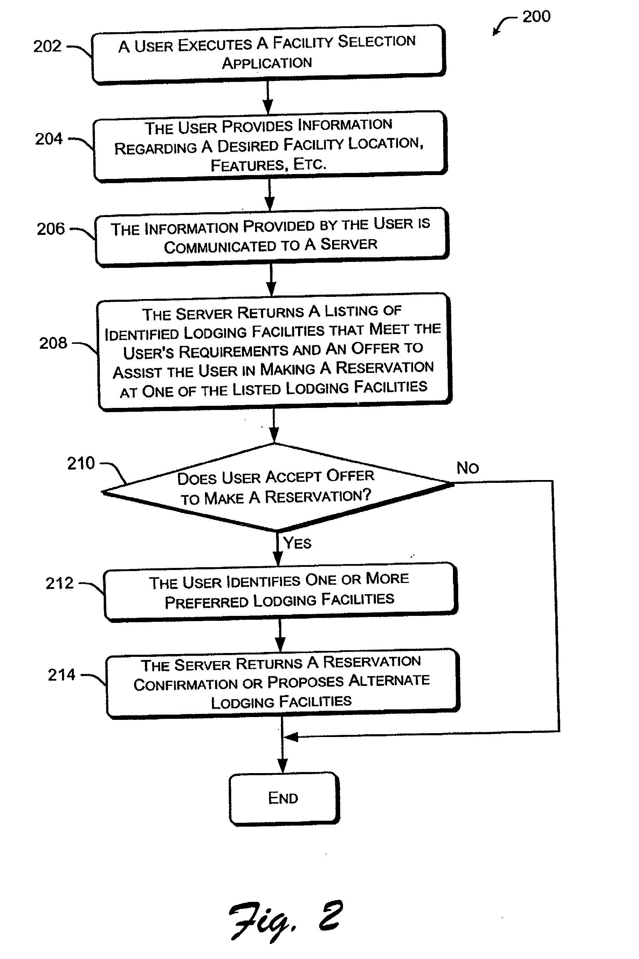

Fig. 2 is a flow diagram illustrating a procedure 200 for identifying facilities with particular features. The procedure 200 begins when a user executes a facility selection application (block 202). The user provides various information regarding a desired facility location and features (block 204). For example, the user may request that a lodging facility be located in a particular city or located within a particular distance from a landmark, such as an airport, a conference center, or a building with a specific street address. The user may also request that the lodging facility have one or more computer-related services, such as an in-room printer that is compatible with the user's software and hardware (i.e., the software and hardware associated with the computing device that is used when traveling). Additionally, the user may specify their travel dates and the type of room desired (e.g., king bed and non-smoking).

The information provided by the user is communicated to a server for processing (block 206). The server identifies lodging facilities that meet the user's requirements and returns a listing of the identified lodging facilities to the user (block 208). The server also offers to assist the user in making a room reservation at one of the listed lodging facilities. The user may accept or decline the server's offer to make a reservation at one of the lodging facilities. If the user accepts the server's offer, the procedure 200 continues to block 212, where the user identifies one or more preferred lodging facilities from the list of lodging facilities provided by the server. The preferred lodging facilities are communicated to the server, which attempts to make a reservation for the user at one of the preferred lodging facilities. After making a reservation, the server returns a reservation confirmation to the user (block 214). If the server was unable to make a reservation at one of the preferred lodging facilities, the server proposes one or more alternate lodging facilities from the previous list of identified lodging facilities. The user may then request a reservation at one of the alternate lodging facilities or decline the server's request to make a reservation for the user.

In an exemplary situation, a user is traveling to Phoenix and wants to locate a hotel near the airport that offers a high-speed Internet connection in a guest's room. The user executes a facility selection application (such as application 112 on computer 102) and enters information regarding the desired hotel (e.g., near the Phoenix airport and having in-room high-speed Internet connections). The server identifies one or more hotels that satisfy the user's requirements and offer services that are compatible with the hardware and software of the computing device that the user carries while traveling. The user selects one or more hotels from the list of hotels identified by the server and allows the server to make a reservation at one of the selected hotels. This system simplifies the reservation process by identifying hotels that meet the user's requirements. Since the server is familiar with the hardware and software used when traveling, the user need not verify the hardware and software types supported by the hotel's e-services. For example, a client system (that is knowledgeable of the system used when traveling) may communicate the hardware and software used when traveling to the server. Also, the server can automatically make reservations for the user, thereby eliminating the need for the user to make their own reservations.

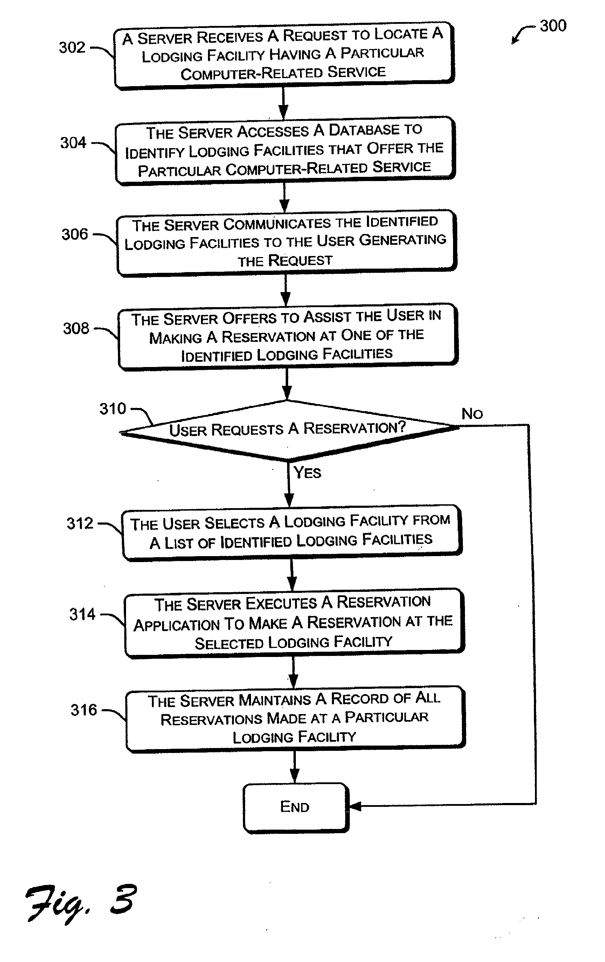

Fig. 3 is a flow diagram illustrating a procedure 300 for locating facilities with requested features and making a reservation at a particular lodging facility. Initially, a server receives a request to locate a lodging facility having a particular computer-related service, such as in-room printing (block 302). The server accesses a database containing information related to various lodging facilities to identify lodging facilities that offer the particular computer-related service requested by the user (block 304). For example, the server 108 in Fig. 1 may access data base 110 using database application 120.

The server then communicates the identified lodging facilities to the user generating the request (block 306). The server also offers to assist the user in making a reservation at one of the identified lodging facilities (block 308). If the user requests a reservation, the user selects a lodging facility from the list of identified lodging facilities (block 312). The server then executes a reservation application (such as reservation application 124) to make a reservation for the user at the selected lodging facility (block 314). The server maintains a record of all reservations made at a particular lodging facility (block 316). This reservation data can be used to generate reports identifying the number of reservations that resulted from a particular e-service offered by a hotel.

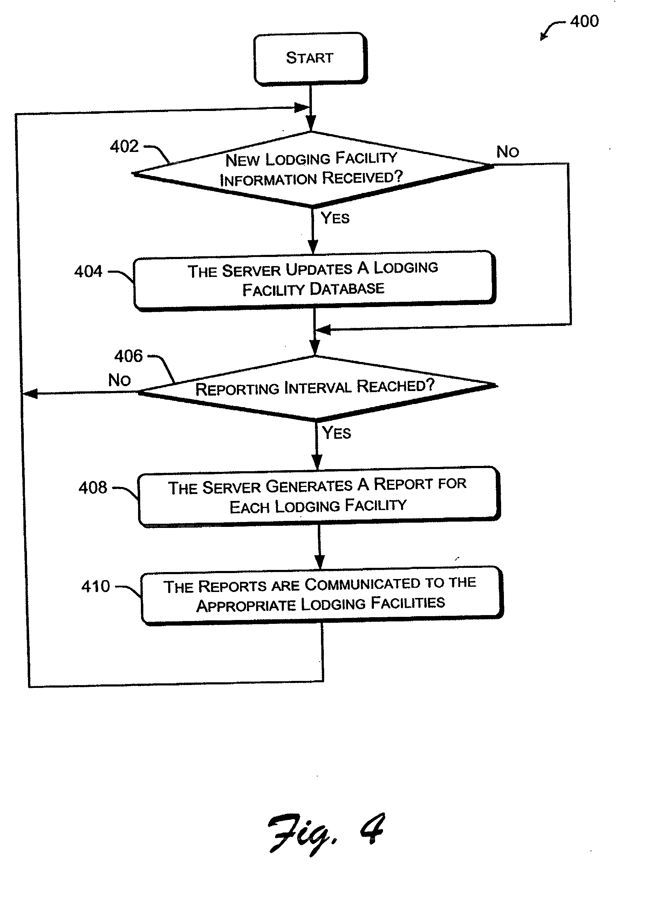

Fig. 4 is a flow diagram illustrating a procedure 400 for updating facility information and generating reports identifying users that selected a facility based on particular services offered by the facility. The procedure begins by determining whether any new lodging facility information has been received (block 402). If new lodging information has been received, the procedure continues to block 404, where the server updates a lodging facility database (e.g., database 110 in Fig. 1). In an alternate embodiment, the lodging facility database may be updated by a different computing device such that the server is not responsible for updating the database.

The procedure 400 then determines whether a reporting interval has been reached (block 406). A reporting interval is an interval of time between generating reports for lodging facilities indicating the number of reservations that resulted from a particular e-service offered by a hotel. A typical reporting interval is one month. If a reporting interval has not been reached, the procedure returns to block 402 to check for new lodging facility information. If a reporting interval is reached, the procedure continues to block 408, where the server generates a report for each lodging facility detailing the reservations made for that lodging facility during the past reporting interval. These reports may be created, for example, by reporting application 126 executing on server 108 in Fig. 1. The reports are then communicated to the appropriate lodging facilities (block 410).

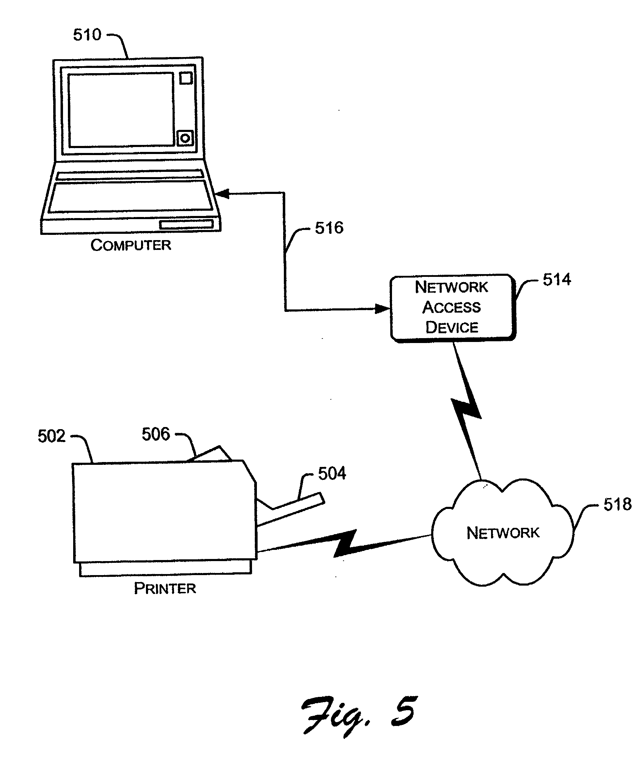

Fig. 5 illustrates an exemplary computer 510 coupled to a network access device 514. Network access device 514 and a printer 502 are coupled to a network 518. The configuration shown in Fig. 5 represents an example configuration in a hotel room (or other facility) that offers an in-room printer and Internet connection. Computer 510 is illustrated as a laptop computer. However, in alternate embodiments, computer 510 may be replaced with a palmtop computer, a PDA, or any other computing device.

Computer 510 is coupled to printer 502 via network 518. Computer 510 is coupled to network access device 514 via a communication link 516. Communication link 516 may be a wired connection (e.g., a parallel cable, universal serial bus (USB) cable, or other physical medium). Alternatively, communication link 516 may be an infrared (IR), radio-frequency (RF), or other wireless communication link.

Printer 502 is illustrated as a laser printer. However, the methods and systems discussed herein can be applied to any type of printer. Printer 502 includes an input tray 504 and an output tray 506. A particular printer may contain multiple input trays (or input devices) and multiple output trays (or output devices). As used herein, a printer refers to any type of device that can generate an image (e.g., a letter, a picture, a drawing, etc.) on any type of print media, such as paper, cardstock, plastic, or fabric. Example devices include impact printers, non-impact printers, digital copiers, analog copiers, facsimile machines, press machines, silk screen machines, etc. Printers can produce images in any of a wide variety of conventional print media (paper, plastic, fabric, etc.). However, for ease of discussion, printers are discussed herein in the context of printing on paper. A printer may also be referred to herein as a "printing device".

Network access device 514 may be a conventional network connection, a network hub, or other device that assists in the coupling of computer 510 to the network 518. Although not shown in Fig. 5, one or more intermediate devices may be connected between network access device 514 and the network 518. Also, network 518 may be coupled to one or more other networks, such as the Internet.

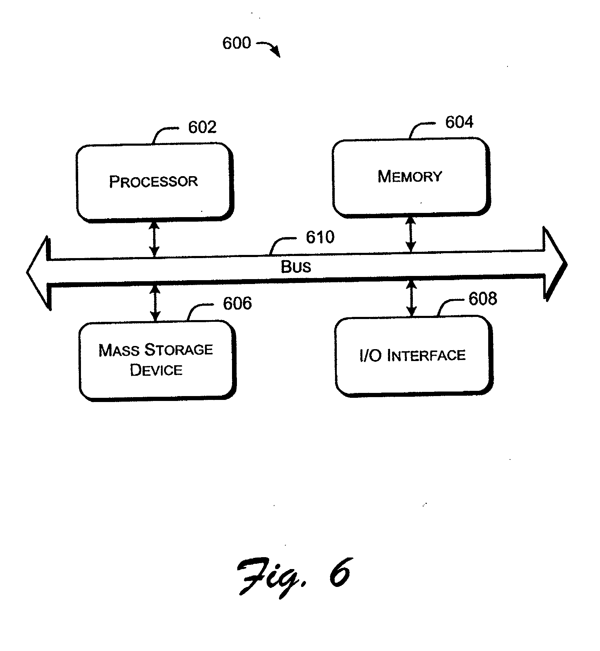

Fig. 6 is a block diagram of a computer system that can be utilized in accordance with one or more embodiments described herein. Computer system 600 can be, for example, a client device such as computer 102 or 106 and/or server 108 of Fig. 1. Computer system 600 represents a wide variety of computing devices, such as desktop computers, portable computers, dedicated server computers, multi-processor computing devices, cellular telephones, PDAs, handheld or pen-based computers, microcontroller-based electronic devices, gaming consoles, and so forth.

Computer system 600 includes one or more processors 602, memory 604, a mass storage device 606, and an input/output (I/O) interface 608, all coupled to a bus 610. Bus 610 represents one or more buses in computer system 600, such as a system bus, processor bus, accelerated graphics port (AGP), peripheral component interconnect (PCI), and so forth. The bus architecture can vary by computing device as well as by manufacturer. I/O interface 608 is a conventional interface allowing components of computer system 600 (e.g., processor(s) 602) to communicate with other computing devices via a network, such as network 104 of Fig. 1. I/O interface 608 may be, for example, a modem, a network interface card (NIC), and so forth.

Memory 604 represents volatile and/or nonvolatile memory used to store instructions and data for use by processor 602. Typically, instructions are stored on mass storage device 606 (or nonvolatile memory) and loaded into a volatile memory 604 for execution by processor(s) 602. Additional memory components may also be involved, such as cache memories internal or external to processor 602. Various embodiments can be implemented, at different times, in any of a variety of computer readable media that is part of, or readable by, computer system 600. For example, such computer readable media may be mass storage device 606, memory 604 or a cache memory, a removable disk (not shown) that is accessible by processor 602 or another controller of computer system 600 (such as a magnetic disk or optical disk), and so forth.

Computer system 600 is exemplary only. It is to be appreciated that additional components (not shown) can be included in computer system 600 and some components illustrated in computer system 600 need not be included. For example, a display adapter, additional processors or storage devices, additional I/O interfaces, and so forth may be included in computer system 600, or mass storage device 606 may not be included.

The discussions herein refer primarily to software components and modules that can be executed by a computing device. It is to be appreciated, however, that the components and processes described herein can be implemented in software, firmware, hardware, or a combination thereof. By way of example, a programmable logic device (PLD) or an application specific integrated circuit (ASIC) could be configured or designed to implement various components and/or processes discussed herein.

Thus, systems and methods for allowing an individual to identify facilities offering a particular service are described herein. Further described are systems and methods for providing reports to facilities indicating the number of individuals that selected the facility based on a particular service offered by the facility. The described embodiments simplify the identification of a facility and, if necessary, the handling of a reservation at the facility. Further, these embodiments provide previously unavailable information regarding reservations based on a particular service to facilities offering the particular service.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A method comprising:
receiving a request to locate a lodging facility having a particular computer-related service (302);
identifying at least one lodging facility having the requested computer-related service (304); and
communicating the at least one lodging facility to a source of the request (306).

2. A method as recited in claim 1 wherein identifying at least one lodging facility includes accessing a database (110) containing a plurality of lodging facilities and a listing of computer-related services associated with each lodging facility.

3. A method as recited in claim 1 wherein the computer-related service is a broadband network connection (514) in at least a portion of the rooms of the lodging facility.

4. A method as recited in claim 1 wherein the computer-related service is a printer (502) in at least a portion of the rooms of the lodging facility.

5. A method as recited in claim 1 wherein the computer-related service is a printer (502) in a conference room of the lodging facility.

6. A method as recited in claim 1 further comprising generating a report to a lodging facility offering computer-related services (408), wherein the report identifies reservations resulting from identifying and communicating lodging facility information to the source of the request.

7. A method comprising:
determining lodging facility requirements (204), wherein the lodging facility requirements include at least one computer-related service;
communicating the lodging facility requirements to a server (206), wherein the server is configured to identify at least one lodging facility that satisfies the lodging facility requirements; and
receiving a listing of lodging facilities that satisfy the lodging facility requirements (208).

8. A method as recited in claim 7 wherein the computer-related service is a broadband network connection (514) available to guests of the lodging facility.

9. A method as recited in claim 7 wherein the computer-related service is a printer (502) in at least a portion of the rooms of the lodging facility.

10. A method as recited in claim 7 further comprising requesting a reservation at one of the listed lodging facilities that satisfy the lodging facility requirements (212).
